# EUROPÄISCHE PATENTSCHRIFT

(11) **EP 0 434 855 B1**
(45) Veröffentlichungstag und Bekanntmachung des Hinweises auf die Patenterteilung: **04.05.1994**
(21) Anmeldenummer: 89123897.4
(22) Anmeldetag: 23.12.1989
(51) Int. Cl.: G01B 9/02, G01J 9/02, G01D 5/26, G02B 6/12, G01D 5/38

(54) **Positionsmesseinrichtung**
Position-measuring device
Dispositif de mesure de positions

(43) Veröffentlichungstag der Anmeldung: 03.07.1991
(73) Patentinhaber: Dr. Johannes Heidenhain GmbH, D-83292 Traunreut (DE)
(72) Erfinder: Allgäuer, Michael, Dipl.-Phys., D-8221 Stein (DE)

(56) Entgegenhaltungen:
- EP-A- 0 276 395
- JOURNAL OF LIGHTWAVE TECHNOLOGY, Band 7, Nr. 2, Februar 1989, Seiten 270-273, IEEE, New York, US; S. URA et al.: "Integrated-optic interferometer position sensor"

## Beschreibung

Die Erfindung bezieht sich auf ein Interferometer gemäß dem Oberbegriff des Anspruches 1.

Interferometer in integriert optischer Bauart sind bekannt. In der Zeitschrift JOURNAL OF LIGHTWAVE TECHNOLOGY, Band 7, Nr. 2, Februar 1989, Seiten 270-273, IEEE, New York, US; S. URA et al.: "Integrated-optic interferometer position sensor" ist ein solches Interferometer beschrieben.

Als weiteres Beispiel sei die DE-C2-36 30 887 genannt. Auch dort wird eine Anordnung auf einem Substrat beschrieben, bei der ein Wellenleiter für den Meßstrahl mit einem Laser verbunden ist. Am anderen Ende des Wellenleiters befindet sich ein Aus- bzw. Einkoppelgitter für den Meßstrahl. Mittels eines Kopplers wird aus dem Meßwellenleiter ein sogenannter Bezugswellenleiter gewonnen, der an einer verspiegelten Kante des Substrates endet, die somit einen Spiegel für den Bezugswellenleiter bildet. Derartige Spiegel oder auch Bragg-Reflektoren sind in der integrierten Optik nicht leicht herzustellen. Auch Systeme, die Linsen benötigen, sind in der Herstellung und Justierung nicht unproblematisch.

Der vorliegenden Erfindung liegt die Aufgabe zugrunde, ein gattungsgemäßes Interferometer zu schaffen, das beispielsweise Reflektoren und Linsen nur in geringstem Umfang benötigt, das also einfach aufgebaut ist, wenig Justageaufwand erfordert, leicht den Erfordernissen angepaßt werden kann und zudem störsicher arbeitet.

Diese Aufgabe wird von einem Interferometer mit den Merkmalen des Anspruches 1 gelöst.

Die Vorteile des erfindungsgemäßen Interferometers liegen darin, daß sich die passiven Elemente und auch die Beleuchtung auf einem Substrat zu einem Interferometer in integriert optischer Bauweise auf kleinstem Raum zusammenfassen lassen und daß jegliche Art von Reflektor und/oder Linse auf dem Chip entfalten kann.

Lediglich der Meßreflektor an dem zu messenden Objekt ist zwangsläufig noch außerhalb des Substrates angeordnet.

Weitere Vorteile sind durch die abhängigen Ansprüche ausgedrückt.

Anhand der Zeichnungen soll mit Hilfe von Ausführungsbeispielen die Erfindung noch näher erläutert werden.

Es zeigt
- Figur 1: ein Interferometer mit Zirkulargittern als Ein- und/oder Auskoppelelemente;
- Figur 2: ein Interferometer mit Lineargittern als Ein- und/oder Auskoppelelemente und
- Figur 3: ein Interferometer mit separatem Referenzkanal.

Wie bei Darstellungen in der integrierten Optik üblich, müssen die Ausführungsbeispiele stark schematisiert und oft auch verzerrt dargestellt sein, damit die wesentlichen Einzelheiten deutlich werden.

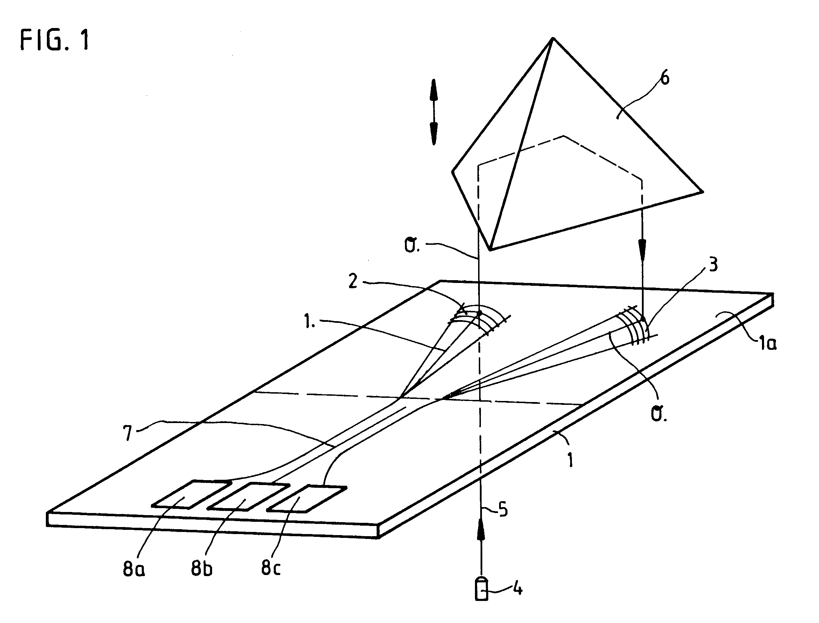

In Figur 1 ist ein Substrat 1 gezeigt, in oder auf dessen Oberfläche sich in einem Teilbereich ein planarer Lichtwellenleiter 1a erstreckt.

Dort sind zwei Zirkulargitter 2 und 3 vorgesehen. Ein von einer Laserdiode 4 in das Substrat 1 einfallendes Strahlenbündel 5 trifft auf das Zirkulargitter 2, welches hier auch als Strahlteiler wirkt. Das nahezu senkrecht einfallende Strahlenbündel 5 wird in seine 0. und 1. Ordnung aufgespalten, wobei das Teilstrahlenbündel 0. Ordnung auf einen Meßreflektor trifft, der hier als Tripelprisma 6 ausgebildet ist. Das Teilstrahlenbündel mit dem Anteil der 1. Ordnung wird abgebeugt und in den planaren Lichtwellenleiter 1a eingekoppelt. Dabei wird dieses Teilstrahlenbündel 1. auf einen Eingang eines integriert-optischen Kopplers 7 fokussiert. Integriert-optischen Koppler 7 sind in verschiedenen Ausführungsformen bekannt. Der Koppler 7 hat drei Ausgänge, die in Detektoren 8a, 8b, 8c münden.

Das Teilstrahlenbündel mit dem Anteil der 1. Ordnung, welches im Zirkulargitter 2 abgebeugt wird, wird über den Koppler 7 den Detektoren 8a bis 8c zugeführt und bildet den Referenzarm des Interferometers.

Das Teilstrahlenbündel mit dem Anteil der 0. Ordnung, welches über den Meßreflektor 6 geführt wird, trifft auf das Zirkulargitter 3, von dem es in einen Zweig des Kopplers 7 fokussiert wird, der in den Detektoren 8a bis 8c mündet. Dieser Zweig bildet den Meßarm des Interferometers.

Im Koppler 7 interferieren die Teilstrahlenbündel von Meßarm 0. und Referenzarm 1., so daß mit Hilfe des Kopplers 7 in den Detektoren 8a, 8b, 8c drei zueinander phasenverschobene Signale erzeugt werden.

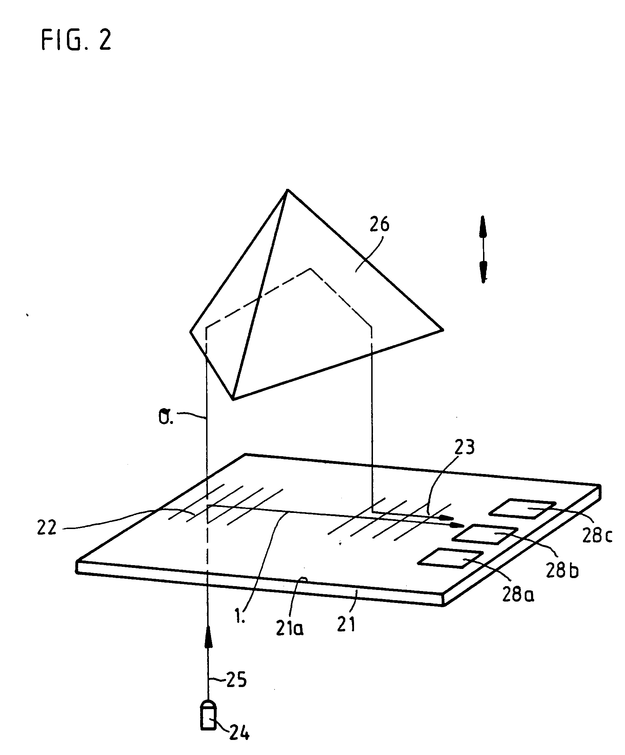

In Figur 2 ist ein ähnliches Interferometer dargestellt, bei dem Lineargitter 22 und 23 verwendet werden. In oder auf der Oberfläche eines Substrates 21 erstreckt sich ein planarer Lichtwellenleiter 21a, in den senkrecht oder nahezu senkrecht ein Strahlenbündel 25 einer Laserdiode 24 einfällt. (Das Strahlenbündel kann auch in nicht gezeigter Weise parallel zum Substrat 21 in den planaren Lichtwellenleiter 21a einfallen, dann ändern sich die Beziehungen der Beugungsordnungen 0. und 1. zum Meßarm und zum Referenzarm). Am Lineargitter 22 wird das einfallende Strahlenbündel 25 in Teilstrahlenbündel aufgespalten. Der Anteil der 0. Ordnung fällt auf einen als Tripelprisma ausgebildeten Meßreflektor 26, der ihn auf das zweite Lineargitter 23 reflektiert, von dem er gebeugt und in den planaren Lichtwellenleiter 21a eingekoppelt wird.

Dort interferiert er mit dem Anteil der 1. Ordnung, der das zweite Lineargitter 23 passiert und nach Bildung von Interferenzstreifen in die Detektoren 28a, 28b, 28c eingespeist wird. Was zeichnerisch nicht darstellbar ist, kann so erläutert werden: Die mit Pfeilen angedeuteten Teilstrahlenbündel 0. und 1. Ordnung haben eine endliche Ausdehnung und die planare Lichtwellenleiterschicht 21a hat eine endliche Dicke. Die zwei ebenen Wellen der 0. und 1. Ordnung interferieren innerhalb dieser Schicht und bilden ein Interferenz-Streifenmuster, welches von den Detektoren 28a, 28b, 28c erfaßt wird. Durch leichte Schrägstellung des zweiten Gitters gegenüber dem ersten Gitter kann dieser Effekt erzeugt werden. Eine weitere Möglichkeit besteht darin, das erste Gitter - wie beschrieben - als Lineargitter 22 auszubilden, aber das zweite Gitter beispielsweise als leichtes Zirkulargitter zu gestalten. In jedem Falle werden die auf eine der beschriebenen - aber nicht auf diese beschränkten - Methoden erzeugten Interferenzstreifen von den Detektoren 28a, 28b, 28c erfaßt und in zueinander phasenverschobene Meßsignale umgeformt.

Zur Erzielung phasenverschobener Interferenzsignale kann aber auch in einem Teil des Referenzstrahls ein phasenschiebendes Element (nicht dargestellt) angebracht werden.

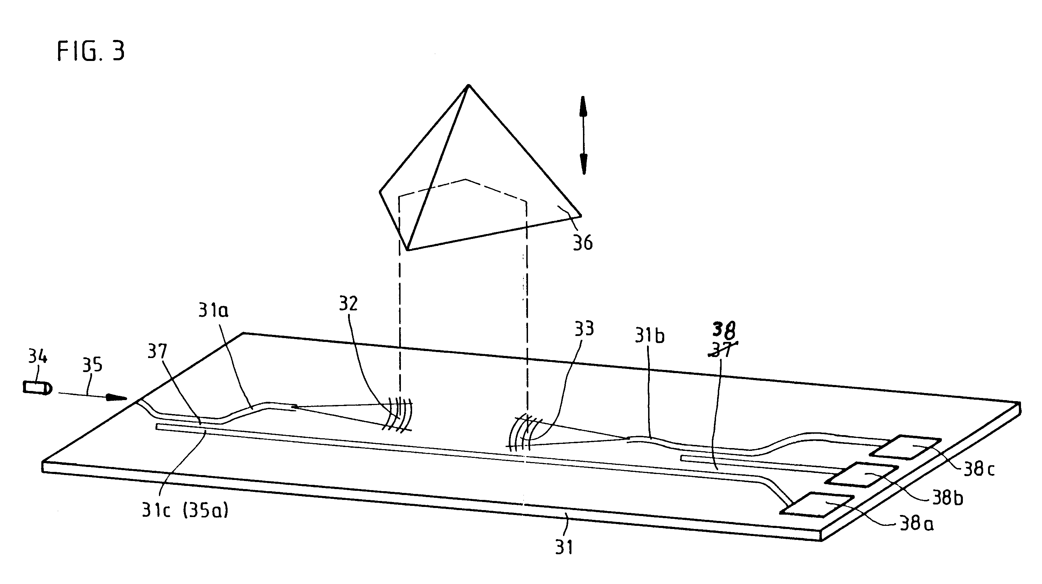

In einer weiteren Ausführungsform gemäß Figur 3 wird ein von einer Laserdiode 34 in einen Lichtwellenleiter 31a einfallendes Strahlenbündel 35 einem Zirkulargitter 32 zugeführt. Dort wird es in Richtung eines Meßreflektors 36 ausgekoppelt und von diesem wieder auf ein Einkoppelgitter 33 reflektiert. Das ins Einkoppelgitter 33 eingespeiste Meß-Strahlenbündel 35 wird dort umgelenkt und von dem Zirkular-(Einkoppel-)gitter 33 in einen Lichtwellenleiter 31b fokussiert, der praktisch die Fortsetzung des ersten Lichtwellenleiters 31a ist.

Bei diesem Ausführungsbeispiel wird der Referenzarm durch ein Teilstrahlenbündel 35a gebildet, das mittels eines Kopplers 37 aus dem Lichtwellenleiter 31a ausgekoppelt und über einen Lichtwellenleiter 31c zu einem Koppler 38 geleitet wird.

Im Koppler 38 interferieren die Teilstrahlenbündel des Meßstrahlenbündels 35 mit dem Referenzstrahlenbündel 35a in bekannter Weise und es werden Interferenzsignale erzeugt, welche durch die Detektoren 38a, 38b, 38c aufgenommen und in zueinander phasenverschobene elektrische Meßsignale umgeformt werden.

## Patentansprüche

1. Positionsmeßeinrichtung, interferometrischer Bauart in integriert optischer Bauweise, mit wenigstens einem aus einem einfallenden Strahlenbündel mittels Strahlteiler gewonnenen Meß- und einem Referenz-Strahlenbündel, einem Meßreflektor und einem Element zur Vereinigung des Meß- und des Referenzstrahlenbündels, dadurch gekennzeichnet, daß zumindest im Strahlengang des Meß-Strahlenbündels (0.,35) wenigstens zwei räumlich getrennte Einkoppel- und/oder Auskoppelelemente (2, 22, 32; 3, 23, 33) angeordnet sind und daß das Meß-Strahlenbündel (0.,35) jedes dieser Einkoppel- und/oder Auskoppelelemente (2, 22, 32; 3, 23, 33) zumindest einmal durchtritt bzw. an ihm gebeugt wird.

2. Interferometer nach Anspruch 1, dadurch gekennzeichnet, daß die Einkoppel- und/oder Auskoppelelemente Gitter (2, 22, 32; 3, 23, 33) sind.

3. Interferometer nach Anspruch 2, dadurch gekennzeichnet, daß die Gitter Zirkular- (2, 3; 32, 33) oder Lineargitter (22, 23) sind.

4. Interferometer nach Anspruch 1, dadurch gekennzeichnet, daß eines der Gitter (2, 22) als Strahlteiler dient, der ein einfallendes Strahlenbündel (5, 25) in das Meß- (0.) und das Referenz-Strahlenbündel (1.) aufteilt.

5. Interferometer nach Anspruch 1, dadurch gekennzeichnet, daß als Lichtquelle eine Laserdiode (4, 24, 34) dient, deren Strahlenbündel unter einem von 90° abweichenden Winkel in das Einkoppelgitter (2, 22) einfällt.

6. Interferometer nach Anspruch 5, dadurch gekennzeichnet, daß die Gitterkonstanten der Gitter (2, 22) von einer Gitterkonstanten abweichen, die für senkrechten Strahleneinfall erforderlich wären.

7. Interferometer nach Anspruch 1, dadurch gekennzeichnet, daß ein Koppler (7, 37) vorgesehen ist, durch den zusätzlich zum Meßsignal ein Gegentaktsignal gewonnen und die Bewegungsrichtung ermittelt werden kann.

8. Interferometer nach Anspruch 1, dadurch gekennzeichnet, daß zur Erzeugung von zueinander phasenverschobenen Meß- bzw. Referenzsignalen ein phasenschiebendes Element (27) zwischen den Lineargittern vorgesehen ist.

9. Interferometer nach Anspruch 1, dadurch gekennzeichnet, daß zur Erzeugung von zueinander phasenverschobenen Meß- bzw. Referenzsignalen das zweite Lineargitter gegenüber dem ersten eine Schrägstellung aufweist.

10. Interferometer nach Anspruch 1, dadurch gekennzeichnet, daß zur Erzeugung von zueinander phasenverschobenen Meß- bzw. Referenzsignalen das zweite Gitter gegenüber dem ersten in der Struktur modifiziert ist.

## Claims

1. Interferometric type position measuring device with an integrated optical structure, with at least one measurement beam obtained from an incoming beam by means of beam splitters, and with a reference beam, with a measurement reflector and an element for unifying the measurement and reference beams, characterised in that at least two spatially separated coupling and/or uncoupling elements (2, 22, 32; 3, 23, 33) are arranged at least in the beam path of the measurement beam (0., 35), and in that the measurement beam (0., 35) of each of these coupling and/or uncoupling elements (2, 22, 32; 3, 23, 33) passes through at least once, or is diffracted thereon.

2. Interferometer according to claim 1, characterised in that the coupling and/or uncoupling elements (2, 22, 32; 3, 23, 33) are grids.

3. Interferometer according to claim 2, characterised in that the grids are circular (2, 3; 32, 33) or linear grids (22, 23).

4. Interferometer according to claim 1, characterised in that one of the grids (2, 22) serves as a beam splitter, which divides the incoming beam (5, 25) into the measurement (0.) and the reference beam (1.).

5. Interferometer according to claim 1, characterised in that the light source is a laser diode (4, 24, 34) whose beam impinges on the coupling grid (2, 22) at an angle deviating from 90°.

6. Interferometer according to claim 5, characterised in that the grid constants of the grids (2, 22) deviate from a grid constant which would be necessary for perpendicular beam impingement.

7. Interferometer according to claim 1, characterised in that a coupler (7, 37) is provided by means of which, in addition to the measurement signal, a counter-cycle signal can be obtained, and the direction of movement determined.

8. Interferometer according to claim 1, characterised in that, in order to obtain measurement or reference signals which are phase-offset to one another, a phase-offsetting element (27) is provided between the linear grids.

9. Interferometer according to claim 1, characterised in that , in order to obtain measurement or reference signals which are phase-offset to one another, the second linear grid has an inclined position relative to the first.

10. Interferometer according to claim 1, characterised in that, in order to obtain measurement or reference signals which are phase-offset to one another, the second grid has a modified structure with respect to the first.

## Revendications

1. Dispositif de mesure de position de type interférométrique à optique intégrée, comportant au moins un faisceau de rayons de mesure et un faisceau de rayons de référence qui sont obtenus au moyen d'un diviseur de faisceau à partir d'un faisceau incident, un réflecteur de mesure et un élément destiné à réunir le faisceau de mesure et le faisceau de référence, caractérisé par le fait qu'au moins deux éléments de couplage et/ou de découplage (2, 22, 32; 3, 23, 33) séparés dans l'espace sont disposés sur le trajet du faisceau de mesure (0., 35) au moins et par le fait que le faisceau de mesure (0., 35) de chacun des éléments de couplage et/ou de découplage (2, 22, 32; 3, 23, 33) traverse au moins une fois celui-ci ou est diffracté au moins une fois par celui-ci.

2. Interféromètre selon la revendication 1, caractérisé par le fait que les éléments de couplage et/ou de découplage sont des réseaux (2, 22, 32; 3, 23, 33).

3. Interféromètre selon la revendication 2, caractérisé par le fait que les réseaux sont des réseaux circulaires (2, 3; 32, 33) ou des réseaux linéaires (22, 23).

4. Interféromètre selon la revendication 1, caractérisé par le fait que l'un des réseaux (2, 22) sert de diviseur de rayon et divise un faisceau (5, 25) incident en faisceau de mesure (0.) et en faisceau de référence (1.)

5. Interféromètre selon la revendication 1, caractérisé par le fait que la source lumineuse est une diode laser (4, 24, 34) dont le faisceau arrive sur le réseau de couplage (2, 22) sous un angle différent de 90°.

6. Interféromètre selon la revendication 5, caractérisé par le fait que les constantes de réseau des réseaux (2, 22) diffèrent d'une constante de réseau qui serait nécessaire pour des faisceaux arrivant perpendiculairement sur la surface.

7. Interféromètre selon la revendication 1, caractérisé par le fait qu'il est prévu un coupleur (7, 37) à l'aide duquel on peut produire, en plus du signal de mesure, un signal symétrique et déterminer la direction de déplacement.

8. Interféromètre selon la revendication 1, caractérisé par le fait qu'il est prévu, entre les réseaux linéaires, un élément déphaseur (27) pour produire des signaux de mesure et de référence mutuellement déphasés.

9. Interféromètre selon la revendication 1, caractérisé par le fait que pour produire des signaux de mesure et de référence mutuellement déphasés, le deuxième réseau linéaire est incliné par rapport au premier.

10. Interféromètre selon la revendication 1, caractérisé par le fait que pour produire des signaux de mesure et de référence mutuellement déphasés, le deuxième réseau a une structure modifiée par rapport au premier.
